(19) Europäisches Patentamt
European Patent Office
Office européen des brevets

(11) **EP 3 948 464 B1**

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **20702093.4**

(22) Anmeldetag: **23.01.2020**

(51) Internationale Patentklassifikation (IPC):
***G05D 1/00*** *(2006.01)*

(52) Gemeinsame Patentklassifikation (CPC):
**G05D 1/0038; G05D 1/0022; G08C 17/00; H04W 4/40;** G05D 2201/0213; H04W 4/38

(86) Internationale Anmeldenummer:
**PCT/EP2020/051603**

(87) Internationale Veröffentlichungsnummer:
**WO 2020/200534 (08.10.2020 Gazette 2020/41)**

(54) **VERFAHREN UND VORRICHTUNG ZUM STEUERN EINES FAHRZEUGES DURCH EINEN TELEOPERATOR**

METHOD AND APPARATUS FOR CONTROLLING A VEHICLE BY MEANS OF A REMOTE OPERATOR

PROCÉDÉ ET DISPOSITIF DE COMMANDE D'UN VÉHICULE PAR UN OPÉRATEUR À DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2019 DE 102019204939**

(43) Veröffentlichungstag der Anmeldung:
**09.02.2022 Patentblatt 2022/06**

(73) Patentinhaber: **Robert Bosch GmbH**
**70442 Stuttgart (DE)**

(72) Erfinder:
• **ECKERT, Kurt**
**71254 Ditzingen (DE)**
• **BLANK, Frederik**
**71634 Ludwigsburg (DE)**
• **WALOSSEK, Erik**
**31180 Giesen (DE)**
• **GERALDY, Alexander**
**31141 Hildesheim (DE)**
• **BENAM, Behzad**
**71229 Leonberg (DE)**
• **WOLTER, Jan**
**30173 Hannover (DE)**
• **SCHWARDMANN, Jens**
**31137 Hildesheim (DE)**
• **FLOESS, Karl Theo**
**74074 Heilbronn (DE)**

(56) Entgegenhaltungen:
DE-A1-102015 122 090     US-A1- 2018 297 210
US-A1- 2018 348 750

**Beschreibung**

Die vorliegende Erfindung betrifft ein Verfahren zum Steuern eines Fahrzeuges durch einen Teleoperator. Die vorliegende Erfindung betrifft darüber hinaus eine entsprechende Vorrichtung, ein entsprechendes Computerprogramm sowie ein entsprechendes Speichermedium.

Stand der Technik

Teilautonome Fahrzeuge nach dem Stand der Technik setzen eine Fahrzeugführungsschnittstelle ("Fahrerarbeitsplatz") sowie eine fahrtüchtige und zum Führen des Fahrzeuges autorisierte Person als Fahrzeuginsassen voraus, welche die Führung bei Bedarf zu übernehmen vermag. Den Gegenstand zahlreicher Forschungsprojekte bildet das sogenannte teleoperierte Fahren (*teleoperated driving,* ToD), bei welchem das Fahrzeug im Wege einer Fernsteuerung bei der Bewältigung herausfordernder Szenarien - wie Umleitungen über Feldwege, alternativer und unkonventioneller Routen o. ä. - unterstützt oder die Fahraufgabe durch einen externen Bediener in einer Leitstelle, den sogenannten Teleoperator, zeitweise gänzlich übernommen werden kann. Fahrzeug und Leitstelle bzw. deren Betreiber sind hierzu durch ein Mobilfunknetzwerk von geringer Latenz und hoher Datenrate miteinander verbunden.

US 9,494,935 B2 offenbart Computervorrichtungen, Systeme und Verfahren für die Fernbedingung eines autonomen Passagierfahrzeugs. Wenn ein autonomes Fahrzeug einer unerwarteten Umgebung wie z. B. einer Straßenbaustelle oder einem Hindernis begegnet, die für autonome Bedienung ungeeignet ist, können die Fahrzeugsensoren Daten über das Fahrzeug und die unerwartete Umgebung, einschließlich Bilder, Radar- und Lidar-Daten usw. erfassen. Die erfassten Daten können zu einem entfernten Bediener gesendet werden. Der entfernte Bediener kann das Fahrzeug manuell entfernt bedienen oder dem autonomen Fahrzeug Anweisungen erteilen, die von verschiedenen Fahrzeugsystemen ausgeführt werden sollen. Die zu dem entfernten Bediener gesendeten erfassten Daten können optimiert werden, um Bandbreite zu sparen, indem z. B. eine eingeschränkte Untermenge der erfassten Daten versendet wird.

Ein Fahrzeug gemäß US 9,767,369 B2 kann ein oder mehrere Bilder einer Umgebung des Fahrzeugs empfangen. Das Fahrzeug kann auch eine Umgebungskarte erhalten. Das Fahrzeug kann auch mindestens ein Merkmal in den Bildern mit einem oder mehreren Merkmalen in der Karte abgleichen. Das Fahrzeug kann auch einen bestimmten Bereich in dem einen oder den mehreren Bildern identifizieren, der einem Teil der Karte entspricht, der sich in einem Schwellenabstand zu dem einen oder den mehreren Merkmalen befindet. Das Fahrzeug kann auch das eine oder die mehreren Bilder komprimieren, um eine geringere Menge an Details in Bereichen der Bilder als dem gegebenen Bereich aufzunehmen. Das Fahrzeug kann die komprimierten Bilder auch einem entfernten System bereitstellen und darauf ansprechend Betriebsanweisungen von dem entfernten System empfangen.

Systeme und Verfahren gemäß US 9,465,388 B1 ermöglichen es einem autonomen Fahrzeug, Hilfe von einem entfernten Bediener anzufordern, wenn das Vertrauen des Fahrzeugs in den Betrieb gering ist. Ein beispielhaftes Verfahren umfasst das Betreiben eines autonomen Fahrzeugs in einem ersten autonomen Modus. Das Verfahren kann auch das Identifizieren einer Situation umfassen, in der ein Vertrauensniveau eines autonomen Betriebs im ersten autonomen Modus unter einem Schwellenwertniveau liegt. Das Verfahren kann ferner das Senden einer Anfrage zur Unterstützung an einen entfernten Assistenten umfassen, wobei die Anfrage Sensordaten einschließt, die einen Teil einer Umgebung des autonomen Fahrzeugs darstellen. Das Verfahren kann zusätzlich das Empfangen einer Antwort von dem entfernten Assistenten umfassen, wobei die Antwort einen zweiten autonomen Betriebsmodus angibt. Das Verfahren kann auch bewirken, dass das autonome Fahrzeug in der zweiten autonomen Betriebsart gemäß der Antwort von dem entfernten Assistenten arbeitet.

US 9,720,410 B2 offenbart ein weiteres Verfahren zur Fernunterstützung für autonome Fahrzeuge in vorbestimmten Situationen.

DE 10 2015 122 090 A1 offenbart ein Verfahren zum Steuern eines Fahrzeugs durch einen Teleoperator in einer Leitstelle, die durch eine Datenverbindung mit dem Fahrzeug verbundenen ist. Während der Teleoperator ein auf Sensordaten des Fahrzeuges basierendes Bild betrachtet, wird eine Blickrichtung des Teleoperators erfasst. Anhand der Blickrichtung werden mehreren Datenströmen von Sensordaten unterschiedliche Prioritäten zugewiesen. Außerdem wird eine Vorhersage hinsichtlich einer Qualität der Datenverbindung getroffen. Auf Basis der Prioritäten und der Qualität der Datenverbindung werden Vorgaben hinsichtlich einer jeweiligen Datenrate der Datenströme angepasst. Zum Aktualisieren des Bildes werden die Sensordaten dann gemäß diesen angepassten Vorgaben vom Fahrzeug an die Leitstelle übertragen.

Offenbarung der Erfindung

Die Erfindung stellt ein Verfahren zum Steuern eines Fahrzeuges durch einen Teleoperator, eine entsprechende Vorrichtung, ein entsprechendes Computerprogramm sowie ein entsprechendes Speichermedium gemäß den unabhängigen Ansprüchen bereit.

Dem erfindungsgemäßen Ansatz liegt hierbei die Erkenntnis zugrunde, dass die Verbindungsqualität der heutigen Mobilfunknetze starke Schwankungen im Hinblick auf beispielsweise Datenraten, Latenzen, Jitter und Paketverlustraten an verschiedenen Zeiten und Orten aufweist. Dies führt bei teleoperiertem Fahren zu Einschränkungen und Problemen, die die Funktionalität und die Sicherheit der Fahrzeuginsassen und anderer Verkehrsteilnehmer beeinträchtigen. Wird beispielsweise eine Datenrate für Videoübertragungen verwendet, die sich nicht prädiktiv an veränderte Netzwerkqualität anpasst, kann es zu Unterbrechungen bei der Videoübertragung kommen, wodurch die Kontrollierbarkeit beeinträchtigt wird. Ein Vorzug der vorgeschlagenen Lösung liegt vor diesem Hintergrund darin, teleoperiertes Fahren trotz Schwankungen in der Verbindungsqualität zu ermöglichen, indem die Auswahl, die Frequenz und die Qualität der übertragenen Sensordaten prädiktiv an veränderte Übertragungsbedingungen angepasst werden. Dies geschieht anhand von Prioritäten der einzelnen Datenflüsse, den Anforderungen der Datenflüsse, der Blickrichtung des Teleoperators sowie einer Vorhersage der Verbindungsqualität. Ein erfindungsgemäßes Verfahren ermöglicht so - durch eine Priorisierung und darauf basierender prädiktiver Anpassung und Vorverarbeitung der übertragenen Daten mit Hilfe einer Vorhersage der Verbindungsqualität - die Nutzung von teleoperiertem Fahren auch bei stark schwankender Verbindungsqualität.

Gemäß einem weiteren Aspekt der Erfindung ist vorgesehen, dass im Rahmen des Verfahrens auch redundante Verbindungen ausgenutzt werden, wobei verschiedene Möglichkeiten bestehen, die zu übertragenden Daten auf die Verbindungen zu verteilen. Auch dabei wird die Vorhersage der Verbindungsqualität hinzugezogen.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, dass sich die übertragenen Sensordaten - in veränderlicher Gewichtung - aus Rohdaten von Radarsensoren, Lidarsensoren oder Kameras des Fahrzeuges, im Wege der Sensordatenfusion anhand der Rohdaten erkannten Objekte außerhalb des Fahrzeuges sowie den durch Videokodierung aus den Rohdaten der Kameras gewonnenen Videostreams zusammensetzen. So können beispielsweise wichtige Daten wie Videostreams permanent übertragen werden, wobei lediglich die Qualität adaptiert wird, andere Daten - wie beispielsweise Rohdaten des Lidarsensors - hingegen nur gesendet werden, wenn die Verbindungsqualität gut ist. Alternativ zu Rohdaten kann so etwa auch eine Objektliste übertragen werden, die bereits im Fahrzeug aus den Rohdaten generiert wird.

Kurze Beschreibung der Zeichnungen

Ausführungsbeispiele der Erfindung sind in den Zeichnungen dargestellt und in der nachfolgenden Beschreibung näher erläutert. Es zeigt:

Figur 4 eine beispielhafte Aufteilung der Fahrzeugumgebung in Bereiche.

Figur 5 schematisch einen Systemaufbau gemäß einer ersten Ausführungsform.

Figur 6 das Flussdiagramm eines Verfahrens gemäß einer zweiten Ausführungsform.

Ausführungsformen der Erfindung

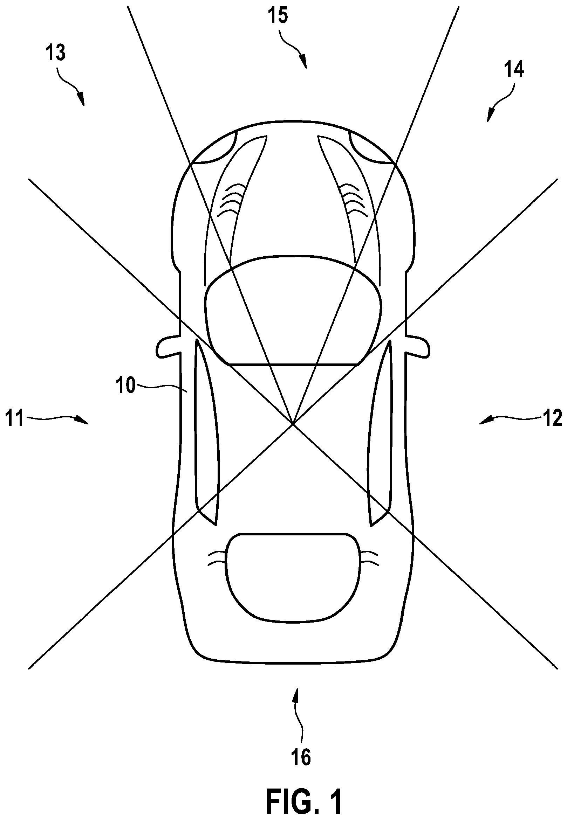

Angesichts einer Vielzahl von Sensoren und Statusinformationen gibt es eine ebenso hohe Anzahl an Datenströmen, die vom Fahrzeug zur Leitstelle übertragen werden. Mit der vorliegenden Ausführungsform werden verfügbare Datenraten detailliert auf die Datenströme aufgeteilt, um auch bei suboptimaler Verbindungsqualität die Teleoperierbarkeit zu gewährleisten. Um die dazu notwendige Priorisierung der Datenströme detailliert durchführen zu können, wird die Fahrzeugumgebung in verschiedene Bereiche aufgeteilt, die durch Richtungsangaben (11-16) relativ zur vorgesehenen Fahrtrichtung des Fahrzeuges (10) definiert sind (siehe Figur 1). Alle Sensordaten mit räumlichem Bezug werden dann einem oder mehreren der besagten Bereiche zugeordnet, sodass für jede Art von Daten und für jeden Bereich ein Datenstrom definiert ist. Zudem wird zentral im Fahrzeug (10) erfasst, welche Datenströme mit welchen Datenraten übertragen werden können. Für jeden Datenstrom in jedem Bereich wird dann eine Priorität berechnet, die die Wichtigkeit des Datenstroms angibt. Dabei wird insbesondere unterschieden, ob ein Bereich innerhalb oder außerhalb des Sichtfeldes des Fahrers liegt. Zum Beispiel wird bei einem Videostream derjenige Bereich, der zurzeit im Sichtfeld des Teleoperators liegt, mit einer höheren Bildqualität übertragen als ein Bereich, den er aktuell nicht betrachtet. Die berechneten Prioritäten werden dann für die Aufteilung der verfügbaren Datenraten auf die einzelnen Datenströme verwendet.

Die Erkennung derjenigen Regionen, welche aktuell im Sichtfeld des Teleoperators liegen, geschieht bei Verwendung normaler Bildschirme anhand von Eye- oder Head-Tracking oder, falls ein Head-Mounted Display (HMD) verwendet wird, durch den dort angezeigten Bildausschnitt.

Die Prioritäten der Datenströme werden basierend auf der Blickrichtung bzw. dem Sichtbereich des Teleoperators sowie optional folgenden Informationen periodisch berechnet:

- einer für jeden Sensortyp vorgegebenen, für Videostreams beispielsweise vergleichsweise hoch angesetzten Priorität,
- der Fahrgeschwindigkeit,
- einer von der Blickrichtung des Operators unabhängigen Bewertung durch das Fahrzeug (10), z. B. hinsichtlich Relevanz oder Kritikalität (einen Hinweis auf letztere könnte zum Beispiel ein Notbremsassistent liefern),
- Art und Anzahl der außerhalb des Fahrzeuges (10) erkannten Objekte,
- der Relevanz oder Kritikalität der erkannten Objekte in Bezug auf die Sicherheitsziele,
- der verwendeten Ausprägung des teleoperierten Fahrens, etwa als ferngesteuertes Manövrieren (*maneuvering*) oder lediglich als Auswahl bzw. Vorgabe von Trajektorien,
- der von einem Cloud-Dienstleister bezogenen oder durch Fahrzeugsensoren ermittelten Verkehrsdichte,
- der Fahrtrajektorie, falls bekannt,
- dem Szenario oder der Umgebung (z. B. Parkplatz, Autobahn, Landstraße oder geschlossene Ortschaft),
- dem von einem Cloud-Dienstleister bezogenen oder durch Kamera, Regen- oder anderweitige Fahrzeugsensoren ermittelten Wetter (z. B. könnten bei Nebel oder Regen die Daten von Radar- oder Lidarsensoren gegenüber jenen von Kameras bevorzugt werden) oder
- dem Abstand zum nächsten im jeweiligen Bereich erkannten Hindernis.

Anhand der Prioritäten aller Datenströme findet dann eine Optimierung statt, wobei für jeden Datenstrom eine erlaubte Datenrate festgelegt wird. Die Datenraten werden so zugewiesen, dass den Datenströmen mit der höchsten Priorität eine möglichst hohe Datenrate und nachrangigen Datenströmen eine geringere Datenrate zugewiesen wird.

Basierend auf der erlaubten Datenrate werden dann für jeden Datenstrom die Qualität und die Frequenz der übertragenen Daten festgelegt. Um die Datenrate so gering wie möglich zu halten, können anstelle von (komprimierten oder unkomprimierten) Rohdaten vorverarbeitete Daten übertragen werden. Beispielsweise kann statt Lidar- und Radar-Rohdaten eine Objektliste übertragen werden, wodurch die benötigte Datenrate stark verringert werden kann. Entsprechendes gilt für die Daten anderer Sensoren. Wenn die Objekterkennung mehrdeutige Ergebnisse liefert, kann auch eine Kombination aus beidem übertragen werden, indem nur für solche Bereiche, in denen die Objekterkennung ungenau war, Rohdaten übertragen werden.

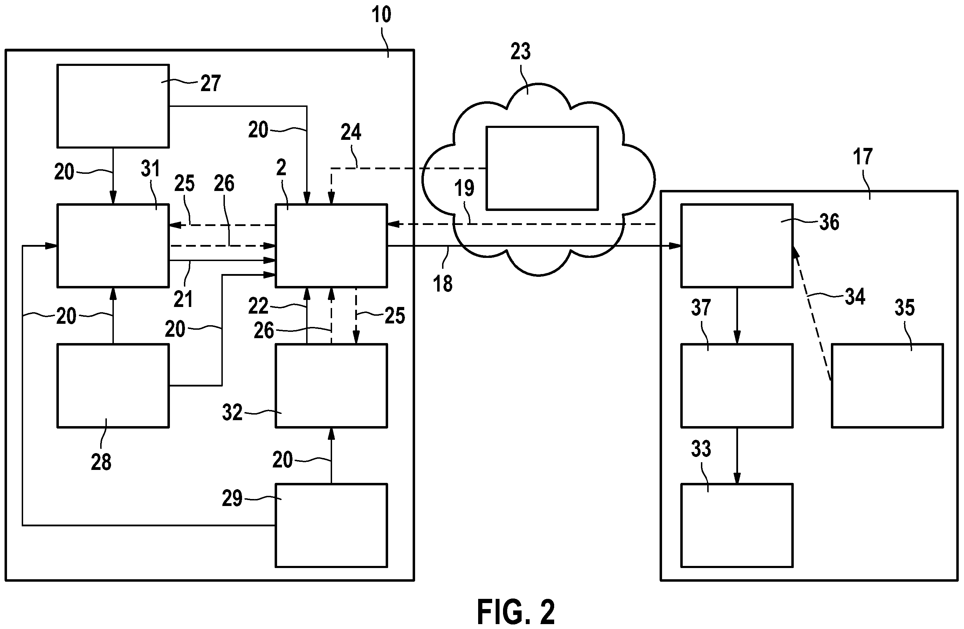

Figur 2 illustriert den Aufbau und Datenfluss eines entsprechenden Systems, wobei gestrichelte Pfeile (19, 24, 25, 26, 34) die Übertragung von Metadaten, durchgezogene Pfeile (18, 20, 21, 22) hingegen die Übertragung von Sensordaten (zum Beispiel 18) veranschaulichen. Zudem wird zeichnerisch zwischen den vorzugsweise im Fahrzeug (10 - abbildungsgemäß links) und den vorzugsweise in der Leitstelle (17 - abbildungsgemäß rechts) umgesetzten Funktionen unterschieden. Ein zentrales Element der vorliegenden Ausführungsform ist die Sensordaten-Priorisierung (2) unter Berücksichtigung aller Datenströme (20, 21, 22) anhand von Informationen aus dem Fahrzeug (10), aus der Leitstelle (17) sowie aus weiteren Quellen wie Cloud-Diensten.

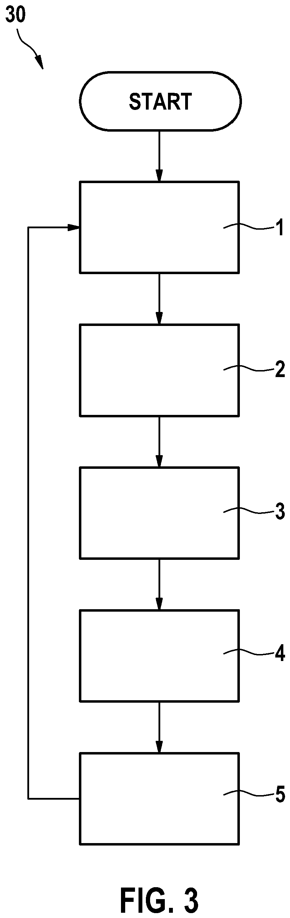

Figur 3 beleuchtet den Ablauf des hierbei angewandten Verfahrens (30). In dessen Rahmen werden regelmäßig Informationen über die Blickrichtung (19) des Teleoperators aus der Leitstelle (17) zur Sensordaten-Priorisierung (2) an das Fahrzeug (10) geleitet (Prozess 1). Basierend auf den oben genannten Einflussfaktoren wird periodisch die Priorität eines jeden Datenstroms berechnet (Prozess 2). Unabhängig davon trifft das System eine Vorhersage (24) der Verbindungsqualität oder Dienstgüte (*quality of service,* QoS), die beispielsweise an Datenraten, Latenzen oder Paketverlustraten gemessen werden mag (Prozess 3). Verwendung findet hierbei etwa die ungünstigste Verbindungsqualität - mit minimaler Datenrate sowie maximaler Latenz und Paketverlustrate -, die über einen Zeitraum von fünf Sekunden zu erwarten ist.

Auf dieser Grundlage wird jedem Datenstrom (20, 21, 22) eine - aus den möglichen Datenraten des Stroms ausgewählte - Datenrate zugeteilt, wobei die Ströme mit hoher Priorität bevorzugt werden, sodass die verfügbare Datenrate optimal ausgenutzt wird (Prozess 4). Schließlich wird für jeden Datenstrom (20, 21, 22) eine Frequenz und Qualität sowie Genauigkeit der Daten gewählt, um die im erfindungsgemäßen Sinne bestmögliche Übertragung im Rahmen der verfügbaren Gesamtdatenrate zu erreichen (Prozess 5).

Dieser Ablauf (1-5) wiederholt sich periodisch mit einer vorgegebenen Frequenz, beispielsweise einmal pro Sekunde. In der Zwischenzeit werden die Daten in der gewählten Qualität an die Leitstelle (17) gesendet und dort angezeigt. Videodaten werden dem Teleoperator hierbei direkt angezeigt; weitere Daten wie Objekte (21) aus den Objektlisten oder Visualisierungen der vom Lidarsensor (28) gelieferten Rohdaten (20) werden dem Videostream (22) überlagert.

Die Berechnung (2) der Prioritäten erfolgt pro Datenstromtyp und pro Bereich um das Fahrzeug (10). Beispielhaft wird im Folgenden eine Festlegung der Priorität $p_{V_{15}}$ für die Videodaten des geradeaus (15 - Figur 1) vor dem Fahrzeug (10) liegenden Bereiches gegeben. Die Parameter $\alpha,$ $\beta$ und $\gamma$ geben dabei jeweils eine Gewichtung der einzelnen Einflüsse an, die für jeden Datenstromtyp und jeden Bereich anders sein können. Der Anteilsfaktor $q_{V_{15}}$ gibt an, in

welchem Maße der besagte Bereich das Blickfeld des Teleoperators überlappt. Im vorliegenden Ausführungsbeispiel gilt der Zusammenhang

$$p_{V_{15}} = \alpha_{V_{15}} \cdot \frac{p_{\text{statisch,Video}}}{p_{\text{max,stat}}} + \beta_{V_{15}} \cdot q_{V_{15}} + \gamma_{V_{15}} \cdot \frac{v}{200 \frac{\text{km}}{\text{h}}},$$

wobei $v$ die gegenwärtige Fahrgeschwindigkeit des Fahrzeuges (10) bezeichnet.

Vom Fahrzeug (10) erkannte und als kritisch eingestufte Objekte (21) oder Ereignisse in Bezug auf die Sicherheitsziele bzw. Fahrzeugsicherheit können eine veränderte Priorisierung (2) der Datenströme (20, 21, 22) bedingen, auch wenn sie außerhalb des Sichtfelds des Operators liegen, aber seine Aufmerksamkeit erfordern könnten. Dies wäre etwa der Fall, wenn sich ein anderes Fahrzeug verdächtig schnell dem teleoperierten Fahrzeug (10) von hinten nähert, der Operator jedoch vorrangig nach vorne schaut. Dieser Ansatz könnte einem entsprechenden ToD-Operator-Warnkonzept zugrunde gelegt werden.

Die Zuteilung der Datenraten könnte bei zuvor bekannter verfügbarer Datenrate R etwa nach dem folgenden Handlungsschema erfolgen:

7. Ziehe die Datenrate $R_{\text{stat}}$ für notwendige Daten wie Statusinformationen von der verfügbaren Datenrate R ab, um die neue verfügbare Datenrate $R_1$ zu erhalten:

$$R_1 = R - R_{\text{stat}}.$$

8. Reserviere 40 % der noch verfügbaren Datenrate $R_1$ für Datenströme (20, 21, 22) mit niedriger Priorität:

$$R_2 = R_1 - R_{\text{low,1}}$$
$$= R_1 - 0{,}4 \cdot R_1.$$

9. Wähle für die Datenströme (20, 21, 22) mit den vier höchsten Prioritäten die Datenratenklasse derart, dass alle vier Datenströme (20, 21, 22) diese Klasse verwenden können, ohne dass die insgesamt verfügbare Datenrate $R_2$ überschritten wird.

10. Reserviere 40 % der noch verfügbaren Datenrate für Datenströme (20, 21, 22) noch niedrigerer Priorität:

$$R_3 = R_{\text{low,1}} - R_{\text{low,2}}$$
$$= R_{\text{low,1}} - 0{,}4 \cdot R_{\text{low,1}}.$$

11. Wähle für die nächsten vier Datenströme (20, 21, 22) die Datenratenklasse derart, dass alle vier Datenströme (20, 21, 22) diese Klasse verwenden können, ohne dass die insgesamt verfügbare Datenrate $R_3$ überschritten wird.

12. Wiederhole die Schritte 4 und 5, bis die verfügbare Datenrate aufgebraucht ist oder nur noch Datenströme (20, 21, 22) mit sehr niedriger Priorität übrig sind.

Wie die Datenströme (20, 21, 22) angepasst werden, um eine bestimmte Datenrate zu erreichen, ist abhängig von deren Art. Für Objektlisten beispielsweise könnten die Anzahl der zu übertragenden Objekte (21) - etwa nur die wichtigsten oder nur die bis zu einem von der Fahrgeschwindigkeit abhängigen Abstand befindlichen Objekte -, der Umfang oder Detailgrad der Zusatzeigenschaften - etwa das per Lidarsensor erfasste Reflexionsverhalten -, die Zuverlässigkeit der Erkennung oder Aktualisierungsfrequenz angepasst werden. Bei Videostreams (22) kommen Codec, Komprimierung, Bildrate, Bit-Tiefe oder Auflösung in Betracht. Im Falle von Rohdaten (20) eines Lidarsensors (28) ist an Aktualisierungsfrequenz, Dichte, Eigenschaften oder Genauigkeit der Punkte zu denken. Wie bei Objektlisten können auch hier bis zu einer maximalen Entfernung vom Fahrzeug (10) erfasste Punkte übertragen werden, wobei, wenn alle Punkte dem Fahrzeug (10) sehr nah sind, die Punktdichte verringert wird.

Die folgende Tabelle gibt beispielhafte Werte für einzelne Datenströme (20, 21, 22) und zugehörige Datenraten an:

| | Statische Priorität | Datenraten-Klasse 1 | Datenraten-Klasse 2 | Datenraten-Klasse 3 | Datenraten-Klasse 4 |
|---|---|---|---|---|---|
| Videostream | $10$ $= p_{\mathrm{max,stat}}$ | 15 | 8 | 3 | 1 |
| Objekte | 7 | 10 | 5 | 1 | 1 |
| Radar-Rohdaten | 3 | 5 | 1 | 1 | 1 |
| Lidar-Rohdaten | 5 | 30 | 10 | 3 | 1 |
| Statusinformationen des Fahrzeuges | immer | 1 | 1 | 1 | 1 |

Als optionale zusätzliche Funktion kommt die Hinzufügung von Redundanz in Betracht, um in Gebieten mit höheren Paketverlustraten die Wahrscheinlichkeit einer erfolgreichen Übertragung zu erhöhen. Das erforderliche Maß an Redundanz kann hierbei abhängig von der Priorität gewählt werden.

Wird ein Ereignisdatenschreiber (*event data recorder,* EDR) in der Cloud eingesetzt, so können die Daten im Fahrzeug (10) zwischengespeichert werden, wenn die Verbindungsqualität schlecht ist, und gesendet werden, wenn die Verbindungsqualität wieder besser ist. Ebenso können in diesem Szenario zu bestimmten Zeiten Daten zwischengespeichert und dann zu einem Server gesendet werden, sobald eine Verbindungsqualität vorherrscht, die eine ausreichende Übertragungskapazität gewährleistet, um den regulären teleoperierten Fahrbetrieb nicht zu beeinträchtigen. Die maßgeblichen Zeitpunkte können z. B. ereignisgesteuert ausgewählt werden, wenn das Fahrzeug (10) eine kritische Situation erkennt, eine Übergabe vom oder zum Teleoperator stattfindet oder wenn letzterer die Aufzeichnung manuell auslöst.

Zu denken ist ferner an die Verwendung von Datenraten, die dynamisch zugewiesen und nicht anhand einer Vorauswahl möglicher Datenraten (26) ausgewählt werden. Zudem könnte, wenn die prädizierten Latenzen einen Schwellwert überschreiten, eine hinter der Vorhersage (24) zurückbleibende Datenrate angenommen werden, um die Latenz nicht weiter zu erhöhen. Es versteht sich, dass die Anpassung der Datenströme (20, 21, 22), um eine vorgegebene maximale Datenrate zu erreichen, auch Fahrzeugdaten wie die Geschwindigkeit berücksichtigen kann. Die möglichen Datenraten pro Datenratenklasse können darüber hinaus dynamisch nach Bedarf angepasst werden.

Weiterhin könnte der Teleoperator selbst entscheiden, welche Daten - etwa Lidar-Rohdaten (20), Objekte (21) oder Videostreams (22) - zur Führung des Fahrzeuges (10) erforderlich sind. Der Teleoperator beeinflusst in diesem Fall - zum Beispiel durch Zu- oder Abwahl einzelner Datenströme (20, 21, 22) oder Datentypen oder manuelle Priorisierung (2) je nach Szenario oder subjektiven Vorlieben -, welche Daten am wichtigsten sind.

Eine Ausgestaltung der Erfindung kann eine von der Figur 2 abweichende Verteilung von Funktionen zwischen Fahrzeug (10) und Leitstelle (17) vorsehen. Zum Beispiel mag die Sensordaten-Priorisierung (2) teilweise in der Leitstelle (17) oder in der Cloud erfolgen.

In sinnvoller Ergänzung des Systems kann bei Verfügbarkeit und Verwendung mehrerer redundanter Übertragungskanäle für jeden der Kanäle die Vorhersage (24) der Verbindungsqualität abgerufen und somit zusätzlich die Priorisierung (2) der Datenströme (20, 21, 22) beeinflusst werden. Dabei kommen verschiedene Optionen in Betracht, um die einzelnen Kanäle zu nutzen und zu priorisieren:

- Die Datenströme (20, 21, 22) mit den höchsten Prioritäten werden auf allen Kanälen parallel übertragen; die Datenströme (20, 21, 22) mit niedrigeren Prioritäten werden jeweils einem der Kanäle fest zugewiesen. Unter den parallel übertragenen Datenströmen (20, 21, 22) wird in der Leitstelle (17) derjenige verwendet, der zuerst ankommt.

- Alle Datenströme (20, 21, 22) werden parallel auf allen Kanälen übertragen.

- Die Datenströme (20, 21, 22) mit den höchsten Prioritäten werden auf demjenigen Kanal übertragen, der die beste Verbindungsqualität bietet, die übrigen Datenströme (20, 21, 22) auf anderen Kanälen.

- Alle Datenströme (20, 21, 22) werden über denjenigen Kanal übertragen, der die beste Verbindungsqualität bietet.

- Ein Teil der Kanäle wird nur zu Zwecken der Redundanz genutzt, um mehr Fehler korrigieren zu können.

- Auf dem stabilsten Kanal wird die Priorisierung (2) und Anpassung der Datenströme (20, 21, 22) wie oben beschrieben durchgeführt; auf weiteren Kanälen werden unterstützend permanent Datenströme (20, 21, 22) in niedrigerer Qualität übertragen.

Dieses Verfahren (30) kann beispielsweise in Software oder Hardware oder in einer Mischform aus Software und Hardware beispielsweise in einem Steuergerät des Fahrzeuges (10) implementiert sein.

**Patentansprüche**

1. Verfahren (30) zum Steuern eines Fahrzeuges (10) durch einen Teleoperator in einer durch eine Datenverbindung mit dem Fahrzeug (10) verbundenen Leitstelle (17),
   mit folgenden Merkmalen:

   - während der Teleoperator ein auf Sensordaten (18) des Fahrzeuges (10) basierendes Bild betrachtet, wird eine Blickrichtung (19) des Teleoperators erfasst (1),
   - mehreren von den Sensordaten (18) umfassten Datenströmen (20, 21, 22) werden anhand der Blickrichtung (19) unterschiedliche Prioritäten zugewiesen (2),
   - eine Vorhersage (24) hinsichtlich einer Qualität der Datenverbindung wird getroffen (3),
   - anhand der Prioritäten und der Qualität der Datenverbindung werden Vorgaben (25) hinsichtlich einer jeweiligen Datenrate der Datenströme (20, 21, 22) angepasst (4) und
   - gemäß den Vorgaben (25) werden die Sensordaten (18) vom Fahrzeug (10) zum Aktualisieren des Bildes an die Leitstelle (17) übertragen (5), **gekennzeichnet durch** folgende Merkmale:
   - für das Übertragen (5) werden mehrere redundante Übertragungskanäle verwendet und
   - die Vorhersage (24) der Verbindungsqualität für jeden der Übertragungskanäle wird abgerufen und beeinflusst die Priorisierung (2) der Datenströme (20, 21, 22).

2. Verfahren (30) nach Anspruch 1,
   **gekennzeichnet durch** folgendes Merkmal:

   - das Treffen (3) der Vorhersage (24) erfolgt durch eine innerhalb oder außerhalb des Fahrzeuges (10) implementierte Vorhersagefunktion (23).

3. Verfahren (30) nach Anspruch 1 oder 2,
   **gekennzeichnet durch** folgendes Merkmal:

   - das Anpassen (4) der Vorgaben (25) erfolgt anhand möglicher Frequenzen oder Datenraten (26) der Datenströme (20, 21, 22).

4. Verfahren (30) nach einem der Ansprüche 1 bis 3,
   **gekennzeichnet durch** mindestens eines der folgenden Merkmale:

   - die Sensordaten (18) umfassen verarbeitete oder unverarbeitete Rohdaten (20) von Radarsensoren (27), Lidarsensoren (28) oder Kameras (29) des Fahrzeuges (10),
   - die Sensordaten (18) umfassen durch eine Sensordatenfusion (31) anhand der Rohdaten (20) erkannte Objekte (21) außerhalb des Fahrzeuges (10) oder
   - die Sensordaten (18) umfassen durch eine Videokodierung (32) aus den Rohdaten (20) der Kameras (29) gewonnene Videostreams (22).

**5.** Verfahren (30) nach einem der Ansprüche 1 bis 4,
**gekennzeichnet durch** folgende Merkmale:

- das Bild wird in der Leitstelle (17) auf einem Display (33) dargestellt,
- eine vom Teleoperator betrachtete Position (34) auf dem Display (33) wird durch Eye-Tracking (35) bestimmt und
- das Erfassen (1) der Blickrichtung (19) erfolgt anhand der betrachteten Position (34).

**6.** Verfahren (30) nach einem der Ansprüche 1 bis 5,
**gekennzeichnet durch** folgende Merkmale:

- die übertragenen (5) Sensordaten (18) werden seitens der Leitstelle (17) von einem Sensordatenempfänger (36) empfangen und
- nach dem Empfangen werden die Sensordaten (18) einer Aufbereitung (37) unterzogen.

**7.** Verfahren (30) nach einem der Ansprüche 1 bis 6,
**dadurch gekennzeichnet, dass**
das Erfassen (1) der Blickrichtung (19) anhand mindestens einer der folgenden Richtungsangaben bezüglich des Fahrzeuges (10) erfolgt:

- links (11),
- rechts (12),
- vorne links (13),
- vorne rechts (14),
- geradeaus (15) oder
- rückwärts (16).

**8.** Computerprogramm, welches eingerichtet ist, das Verfahren (30) nach einem der Ansprüche 1 bis 7 auszuführen.

**9.** Maschinenlesbares Speichermedium, auf dem das Computerprogramm nach Anspruch 8 gespeichert ist.

**10.** Vorrichtung (10), die eingerichtet ist, das Verfahren (30) nach einem der Ansprüche 1 bis 7 auszuführen.


**Claims**

**1.** Method (30) for controlling a vehicle (10) by means of a teleoperator in a control centre (17) connected to the vehicle (10) by means of a data connection,
having the following features:

- while the teleoperator is viewing an image based on sensor data (18) from the vehicle (10), a viewing direction (19) of the teleoperator is captured (1),
- different priorities are assigned (2) to a plurality of data streams (20, 21, 22) included in the sensor data (18) on the basis of the viewing direction (19),
- a prediction (24) of a quality of the data connection is made (3),
- specifications (25) with regard to a respective data rate of the data streams (20, 21, 22) are adapted (4) on the basis of the priorities and the quality of the data connection, and
- according to the specifications (25), the sensor data (18) are transmitted (5) from the vehicle (10) to the control centre (17) for the purpose of updating the image, **characterized by** the following features:
- a plurality of redundant transmission channels are used for the transmission (5), and
- the prediction (24) of the connection quality for each of the transmission channels is retrieved and influences the prioritization (2) of the data streams (20, 21, 22).

**2.** Method (30) according to Claim 1,
**characterized by** the following feature:

- the prediction (24) is made (3) by means of a prediction function (23) implemented inside or outside the vehicle (10).

**3.** Method (30) according to Claim 1 or 2,
**characterized by** the following feature:

- the specifications (25) are adapted (4) on the basis of possible frequencies or data rates (26) of the data streams (20, 21, 22).

**4.** Method (30) according to one of Claims 1 to 3,
**characterized by** at least one of the following features:

- the sensor data (18) comprise processed or unprocessed raw data (20) from radar sensors (27), lidar sensors (28) or cameras (29) of the vehicle (10),
- the sensor data (18) comprise objects (21) outside the vehicle (10) that are detected on the basis of the raw data (20) by means of a sensor data fusion (31), or
- the sensor data (18) comprise video streams (22) obtained from the raw data (20) from the cameras (29) by means of video coding (32).

**5.** Method (30) according to one of Claims 1 to 4,
**characterized by** the following features:

- the image is presented on a display (33) in the control centre (17),
- a position (34) viewed by the teleoperator on the display (33) is determined by means of eye tracking (35), and
- the viewing direction (19) is captured (1) on the basis of the position (34) that is viewed.

**6.** Method (30) according to one of Claims 1 to 5,
**characterized by** the following features:

- the transmitted (5) sensor data (18) are received by the control centre (17) from a sensor data receiver (36), and
- the sensor data (18) are subjected to preprocessing (37) after reception.

**7.** Method (30) according to one of Claims 1 to 6,
**characterized in that**
the viewing direction (19) is captured (1) on the basis of at least one of the following items of directional information relating to the vehicle (10):

- on the left (11),
- on the right (12),
- at the front left (13),
- at the front right (14),
- straight ahead (15) or
- backwards (16).

**8.** Computer program which is configured to carry out the method (30) according to one of Claims 1 to 7.

**9.** Machine-readable storage medium on which the computer program according to Claim 8 is stored.

**10.** Apparatus (10) which is configured to carry out the method (30) according to one of Claims 1 to 7.

**Revendications**

**1.** Procédé (30) de commande d'un véhicule (10) par un téléopérateur dans un poste de commande (17) relié au véhicule (10) par une liaison de données, ledit procédé présentant les caractéristiques suivantes :

- une direction de visualisation (19) du téléopérateur est détectée (1) pendant que le téléopérateur visualise une image basée sur des données de capteur (18) du véhicule (10),
- différentes priorités (2) sont attribuées à plusieurs flux de données (20, 21, 22), inclus dans les données de capteur (18), en fonction de la direction de visualisation (19),
- une prédiction (24) est faite (3) en ce qui concerne la qualité de la liaison de données,

- des spécifications (25) concernant un débit de données respectif des flux de données (20, 21, 22) sont ajustées (4) sur la base des priorités et de la qualité de la liaison de données, et
- selon les spécifications (25), les données de capteur (18) sont transmises (5) du véhicule (10) au poste de commande (17) afin d'actualiser l'image, **caractérisé par** les caractéristiques suivantes :
- plusieurs canaux de transmission redondants sont utilisés pour la transmission (5), et
- la prédiction (24) de la qualité de liaison de chacun des canaux de transmission est récupérée et influe sur la priorisation (2) des flux de données (20, 21, 22).

**2.** Procédé (30) selon la revendication 1,
**caractérisé par** la caractéristique suivante :

- la prédiction (24) est faite (3) par une fonction de prédiction (23) mise en œuvre à l'intérieur ou à l'extérieur du véhicule (10).

**3.** Procédé (30) selon la revendication 1 ou 2,
**caractérisé par** la caractéristique suivante :

- l'adaptation (4) des spécifications (25) est effectuée sur la base des fréquences ou débits de données (26) possibles des flux de données (20, 21, 22) .

**4.** Procédé (30) selon l'une des revendications 1 à 3, **caractérisé par** au moins une des caractéristiques suivantes :

- les données de capteur (18) comprennent des données brutes (20) traitées ou non traitées provenant de capteurs radar (27), de capteurs lidar (28) ou de caméras (29) du véhicule (10),
- les données de capteur (18) comprennent des objets (21) situés à l'extérieur du véhicule (10) et détectés par une fusion de données de capteur (31) sur la base des données brutes (20) ou
- les données de capteur (18) comprennent des flux vidéo (22) obtenus des données brutes (20) des caméras (29) par un codage vidéo (32).

**5.** Procédé (30) selon l'une des revendications 1 à 4, **caractérisé par** les caractéristiques suivantes :

- l'image est représentée sur un moyen d'affichage (33) dans le poste de commande (17),
- une position (34), observée par le téléopérateur, sur le moyen d'affichage (33) est déterminée par suivi oculaire (35) et
- la détection (1) de la direction de visualisation (19) est effectuée sur la base de la position observée (34) .

**6.** Procédé (30) selon l'une des revendications 1 à 5, **caractérisé par** les caractéristiques suivantes :

- les données de capteur (18) transmises (5) sont reçues par un récepteur de données de capteur (36) du côté du poste de commande (17) et
- après réception, les données de capteur (18) sont soumises à un traitement (37).

**7.** Procédé (30) selon l'une des revendications 1 à 6, **caractérisé en ce que**

- la détection (1) de la direction de visualisation (19) est effectuée sur la base d'au moins une des informations directionnelles suivantes rapportées au véhicule (10) :

  - du côté gauche (11),
  - du côté droit (12),
  - du côté avant gauche (13),
  - du côté avant droit (14),
  - tout droit (15) ou
  - vers l'arrière (16).

**8.** Logiciel qui est conçu pour mettre en œuvre le procédé (30) selon l'une des revendications 1 à 7.

**9.** Support de stockage lisible par machine sur lequel le logiciel selon la revendication 8 est stocké.

**10.** Dispositif (10) qui est conçu pour mettre en œuvre le procédé (30) selon l'une des revendications 1 à 7.

**FIG. 1**

**FIG. 2**

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9494935 B2
- US 9767369 B2
- US 9465388 B1
- US 9720410 B2
- DE 102015122090 A1